# EUROPÄISCHE PATENTSCHRIFT

(11) **EP 1 620 646 B1**
(45) Veröffentlichungstag und Bekanntmachung des Hinweises auf die Patenterteilung: **22.01.2020**
(21) Anmeldenummer: 04723988.4
(22) Anmeldetag: 29.03.2004
(51) Int. Cl.: F03D 1/06

(54) **ROTORBLATT EINER WINDENERGIEANLAGE**
ROTOR BLADE OF A WIND ENERGY FACILITY
PALE DE ROTOR D'UNE INSTALLATION A ENERGIE EOLIENNE

(30) Priorität: 28.04.2003 DE 10319246
(43) Veröffentlichungstag der Anmeldung: 01.02.2006
(60) Teilanmeldung: 10183781.3
(73) Patentinhaber: Wobben Properties GmbH, 26607 Aurich (DE)
(72) Erfinder: Wobben, Aloys, 26607 Aurich (DE)
(74) Vertreter: Eisenführ Speiser
(86) Internationale Anmeldenummer: PCT/EP2004/003294
(87) Internationale Veröffentlichungsnummer: WO 2004/097215

(56) Entgegenhaltungen:
- EP-A- 1 152 148
- EP-A- 1 184 566
- EP-A- 1 314 885
- WO-A-02/051730
- WO-A-03/104646
- DE-A- 10 003 385
- FR-A- 908 631
- US-A- 2 465 007
- US-A- 4 773 824
- US-A- 5 417 548
- US-A- 5 474 425
- US-A- 6 068 446
- TIMMER W A ET AL: "THICK AIRFOILS FOR HAWTS" JOURNAL OF WIND ENGINEERING AND INDUSTRIAL AERODYNAMICS, XX, XX, Bd. 39, 1992, Seiten 151-160, XP000537076
- WORTMANN: "FX77W343" [Online] 9. September 2003 (2003-09-09), NIHON UNIV. AERO STUDENT GROUP , NASG AIRFOIL DATABASE , XP002253850 Gefunden im Internet: URL:HTTP://WWW.NASG.COM/AFDB/SHOW-AIRFOIL- E.PHTML?ID=338> [gefunden am 2003-09-09] Abbildung
- DIETER ALTHAUS: "Cambered Airfoils without Flaps for use in Wind Turbines" In: "Niedrig-geschwindigkeits-profile", 1 January 1996 (1996-01-01), VIEWEG&SOHN VERLAGSGESELLSCCHAFT MBH, LENGERICH, DEUTSCHLAND, XP055079965, ISBN: 978-3-52-803820-5 pages 157-159,

## Beschreibung

Die Erfindung betrifft ein Rotorblatt einer Windenergieanlage sowie eine Windenergieanlage.

Als Stand der Technik hierzu sei allgemein auf das Buch "Windkraftanlagen", Erich Hau, 1996, verwiesen. Dieses Buch enthält einige Beispiele für Windenergieanlagen, Rotorblätter solcher Windenergieanlagen sowie Querschnitte solcher Rotorblätter aus dem Stand der Technik. Auf Seite 102, Bild 5.34., sind die geometrischen Profilparameter von aerodynamischen Profilen gemäß NACA dargestellt. Dabei ist zu sehen, dass das Rotorblatt beschrieben wird durch eine Profiltiefe, die der Länge der Sehne entspricht, einer größten Wölbung (oder Wölbungsverhältnis) als maximale Erhebung einer Skelettlinie über der Sehne, einer Wölbungsrücklage, also dem Ort bezogen auf die Profiltiefe, wo die größte Wölbung innerhalb des Querschnittes des Rotorblattes ausgebildet ist, eine größte Profildicke als größter Durchmesser eines eingeschriebenen Kreises mit dem Mittelpunkt auf der Skelettlinie und der Dickenrücklage, also dem Ort bezogen auf die Profiltiefe, wo der Querschnitt des Rotorblatts seine größte Profildicke annimmt. Ferner werden der Nasenradius sowie die Profilkoordinaten der Unter- und Oberseite zur Beschreibung des Querschnitts des Rotorblatts herangezogen. Die aus dem Buch Erich Hau bekannte Nomenklatur soll u. a. für die weitere Beschreibung des Querschnitts eines Rotorblatts für die vorliegende Anmeldung beibehalten werden.

Als allgemeiner weiterer Stand der Technik sei auf die Dokumente DE 103 07 682; US 5,474,425; US 6,068,446 sowie DE 694 15 292 hingewiesen. Ein zweiteiliges Rotorblatt ist aus WO 02/051730 (Wobben, Aloys) bekannt.

Rotorblätter sind anhand einer Vielzahl von Aspekten zu optimieren. Einerseits sollen sie leise sein, andererseits sollen sie auch eine maximale dynamische Leistung bereitstellen, damit bei schon recht geringem Wind die Windenergieanlage zu laufen beginnt und bei möglichst geringen Windstärken bereits die Nennwindgeschwindigkeit erreicht wird, also die Geschwindigkeit, bei welcher auch erstmals die Nennleistung der Windenergieanlage erreicht wird. Steigt dann die Windgeschwindigkeit weiter an, so wird heutzutage bei pitchregulierten Windenergieanlagen das Rotorblatt immer mehr in den Wind gestellt, so dass die Nennleistung weiter erhalten bleibt, die Angriffsfläche des Rotorblatts zum Wind jedoch abnimmt, um somit die gesamte Windenergieanlage bzw. ihre Teile vor mechanischen Schäden zu schützen. Entscheidend ist aber, dass den aerodynamischen Eigenschaften der Rotorblattprofile des Rotorblatts einer Windenergieanlage eine große Bedeutung zukommt.

Aufgabe der vorliegenden Erfindung ist es, ein Rotorblatt mit einem Rotorblattprofil bzw. eine Windenergieanlage anzugeben, welches bzw. welche eine bessere Leistungsfähigkeit als bisher aufweist.

Die Aufgabe wird erfindungsgemäß mit einem Rotorblatt mit einem Rotorblattprofil mit den Merkmalen nach dem unabhängigen Anspruch gelöst.

Vorteilhafte Weiterbildungen sind in den abhängigen Ansprüchen beschrieben.

Die konkreten Koordinaten eines erfindungsgemäßen Rotorblattprofils nach der Erfindung sind in einer Tabelle 1 angegeben.

Die Erfindung ist nachfolgend von mehreren Zeichnungen dargestellt. Hierin zeigen:
- Fig. 1: eine Ansicht einer erfindungsgemäßen Windenergieanlage aus einer Perspektive von vorne,
- Fig. 2: eine Ansicht einer erfindungsgemäßen Windenergieanlage aus einer Perspektive von seitlich hinten,
- Fig. 3: die Ansicht einer erfindungsgemäßen Windenergieanlage von der Seite,
- Fig. 4-8: Ansichten eines erfindungsgemäßen Rotorblatts aus verschiedenen Richtungen
- Fig. 9: eine vergrößerte Ansicht einer erfindungsgemäßen Windenergieanlage
- Fig. 10: eine Ansicht eines erfindungsgemäßen Rotorblatts
- Fig. 11-17,19: verschiedene Ansichten einer erfindungsgemäßen Windenergieanlage
- Fig. 18: einen Querschnitt eines erfindungsgemäßen Rotorblatts (im nabennahen Bereich)

Das gemäß der vorliegenden Anmeldung beschriebene Rotorblattprofil ist im Besonderen in dem Bereich des Rotorblatts ausgebildet, der dem Rotorblattanschluss (zum Anschluss an die Nabe) anschließt. Bevorzugt ist das in der vorliegenden Anmeldung beschriebene Profil im ersten Drittel des Rotorblatts, - bezogen auf die Gesamtlänge des Rotorblatts, ausgebildet. Die Gesamtlänge eines Rotorblatts kann hierbei durchaus im Bereich von 10 m bis 70 m liegen, je nachdem, welche Nennleistung eine Windenergieanlage haben soll. So beträgt beispielsweise die Nennleistung einer Windenergieanlage der Firma Enercon vom Typ E-112 (Durchmesser ca. 112 m) 4,5 MW, die Nenn-Leistung einer Windenergieanlage der Firma Enercon vom Typ E-30 beträgt hingegen 300 KW.

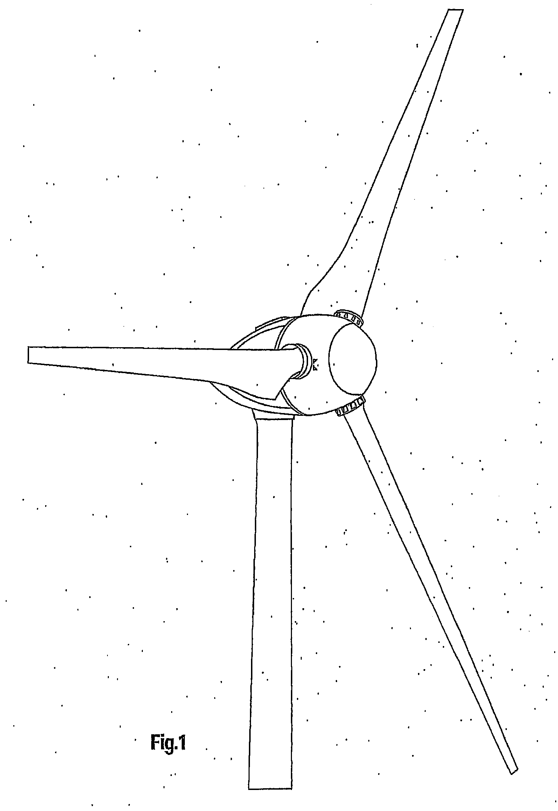

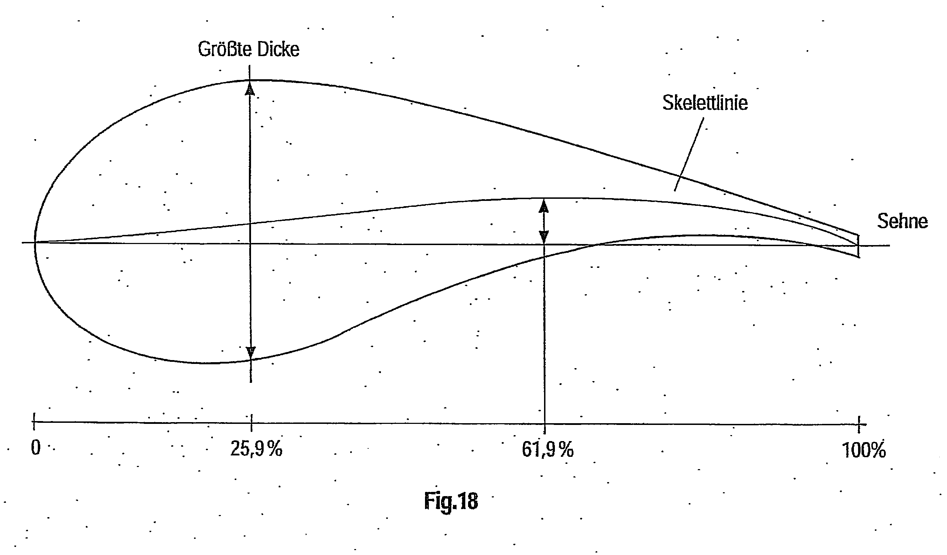

Besonders charakteristisch für das Profil des erfindungsgemäßen Rotorblatts ist, dass die größte Profildicke etwa 25 % bis 40 %, bevorzugt 32 % bis 36 % der Länge der Rotorblattsehne ausmacht. In der Figur 18 beträgt die größte Profildicke etwa 34,6 % der Länge der Rotorblattsehne. In der Figur 1 ist eine Sehne 1 eingetragen, die von der Mitte 2 der Rotorblatthinterkante 3 bis zum vordersten Punkt 4 der Rotorblattnase 5 verläuft. Die Dickenrücklage, also der Ort bezogen auf die Blattlänge, wo die größte Profildicke ausgebildet ist, beträgt etwa 20 % bis 30 % der Länge der Sehne, bevorzugt 23 % bis 28 %, im dargestellten Beispiel 25,9 %. Die größte Dicke wurde senkrecht zu der Sehne ermittelt und die Rücklage ist auf die Rotorblattnase bezogen.

Weiterhin ist in der Figur 18 eine sog. Skelettlinie 7 eingetragen. Diese Skelettlinie ergibt sich aus der jeweiligen halben Dicke des Rotorblattes 8 an einem Punkt. Entsprechend verläuft diese Skelettlinie nicht geradlinig, sondern immer exakt zwischen gegenüberliegenden Punkten auf der Druckseite 9 des Rotorblattes 7 und der Saugseite 10 des Rotorblattes 7. Die Skelettlinie schneidet die Sehne an der Rotorblatthinterkante und der Rotorblattnase.

Die Wölbungsrücklage beim Querschnitt eines erfindungsgemäßen Rotorblatts beträgt etwa 55 % bis 70 % der Länge der Sehne, bevorzugt etwa 59 % bis 63 %. Im dargestellten Beispiel beträgt die Wölbungsrücklage etwas 61,9 % der Länge der Sehne. Die größte Wölbung beträgt hierbei etwa 4 % bis 8 % der Länge der Sehne, bevorzugt etwa 5 % bis 7 % der Länge der Sehne. Im dargestellten Beispiel beträgt die Wölbung etwa 5,87 % der Länge der Sehne.

Besonders augenfällig ist für das Profil des erfindungsgemäßen Rotorblatts weiterhin, dass die Druckseite des Rotorblatts zweimal die Sehne "schneidet", in diesem Bereich also die Druckseite des Profils konkav ausgebildet ist, während im vorderen Profilbereich, die Druckseite konvex ausgebildet ist. In dem Bereich, wo die Druckseite konkav ausgebildet ist, ist im entsprechenden, gegenüberliegenden Bereich auf der Saugseite diese fast geradlinig begrenzt.

Es mag durchaus bekannt gewesen sein, die Druckseite mit einer konkaven Krümmung auszubilden oder die Saugseite mit einer geradlinigen Begrenzung zu versehen. Besonders die Kombination beider Maßnahmen ist aber für das Profil eines erfindungsgemäßen Rotorblatts von großer Bedeutung und charakteristisch für das erfindungsgemäße Rotorblattprofil.

Auch die Rotorblatthinterkante des dargestellten Profils ist auffallend dick. Dies ist jedoch bezüglich der Ausbildung von Schall an der Rotorblatthinterkante nicht problematisch, weil das dargestellte Profil sich im inneren Drittel des Rotorkreises befindet und dort die Bahngeschwindigkeit nicht sehr hoch ist.

Die x-y-Koordinaten des in der Figur dargestellten Profils sind in Tabelle 1 wiedergegeben und damit wird das Profil des erfindungsgemäßen Rotorblatts exakt beschrieben.

Zur Verbesserung der aerodynamischen Form des Rotorblatts ist dieses in dem Bereich der Rotorblattwurzel so ausgebildet, dass es dort seine größte Breite aufweist und somit das Rotorblatt eine der aerodynamischen Optimalform mehr oder weniger angenäherte Trapezform (in der Aufsicht) aufweist. Bevorzugt ist das Rotorblatt im Bereich der Rotorblattwurzel so ausgebildet, dass die der Gondel einer Windenergieanlage zugewandte Kante der Rotorblattwurzel der äußeren Kontur der Gondel in wenigstens einer Winkelstellung angepasst ist, z. B. derart angepasst ist, dass zwischen der Gondel und der der Windenergieanlage zugewandten Kante der Rotorblattwurzel und der äußeren Kontur der Gondel bei Stellung des Rotorblatts in Nenn-Windstellung ein sehr geringer Abstand, z. B. einen Abstand von etwa 5 mm bis 100 mm besteht.

Bei einem Rotorblatt mit den vorgenannten Eigenschaften hat sich eine signifikant höhere Leistungssteigerung, z. T. bis zu 10 % ergeben. Durch diese nicht vorhersagbare Leistungssteigerung erreicht eine erfindungsgemäße Windenergieanlage bei einer gegebenen Windgeschwindigkeit unterhalb der Nennwindgeschwindigkeit eine höhere Leistung. Außerdem erreicht sie früher als bisher ihre Nennleistung. Entsprechend können die Rotorblätter auch früher gedreht (gepitcht) werden und damit sinkt die Schallemission einerseits und die mechanische Belastung der Anlage andererseits.

Dabei liegt der Erfindung die Erkenntnis zugrunde, dass die heute gängige Rotorblattform im Windkanal zwar bei unterschiedlichen Windgeschwindigkeiten, aber stets gleichförmiger Luftströmung untersucht wird. Da der Wind in der Natur aber in den seltensten Fällen in der Fläche gleichförmig weht, sondern einer stochastischen Gesetzmäßigkeit unterliegt, kommt es bei den bekannten Rotorblättern in Folge von Böen zur Ablösung der Strömung gerade im Blattinnenbereich nahe der Rotornabe, wo das Blatt eben nicht mehr aerodynamisch sauber und optimal ausgebildet ist. Diese Strömungsablösung setzt sich in Richtung des Rotorblattaußenbereichs (Rotorblatttip) ein Stück entlang des Rotorblattes fort. Dadurch kann sich die Strömung vom Rotorblatt in einem blasenförmigen Bereich vom Rotorblatt lösen und so zu entsprechenden Leistungseinbußen führen. Bei der Erfindung und bei Betrachtung der vorbeschriebenen Ausgangssituation kann also durch ein sauber ausgebildetes Rotorblatt auch im Rotorblattinnenbereich eine erhebliche Leistungssteigerung erzielt werden.

Würde man nunmehr ein bekanntes Standardprofil anstelle des in der vorliegenden Anmeldung vorgeschlagenen, empirisch ermittelten Profils verwenden, wäre für eine aerodynamisch saubere Ausbildung des Rotorblatts etwa die doppelte Profiltiefe (dies entspricht der Länge der Sehne des Rotorblattes) im unteren Rotorblattbereich (nabennahen Bereich) erforderlich. Die hohe Profildicke im vorderen Bereich ist aber für einen sichere Lastabtrag und zur Erreichung eines Auftriebswertes C_{A} größer als 2 erforderlich.

Wie aus dem Stand der Technik bekannt ist, werden heutzutage regelmäßig Rotorblätter gebaut, die im Innenbereich möglichst eine große Materialeinsparung aufweisen. Typische Beispiele hierfür zeigt der bereits erwähnte Stand der Technik nach "Windkraftanlagen", Erich Hau, 1996, auf den Seiten 114 und 115. Dort ist zu sehen, dass die größte Profiltiefe stets in einem gewissen Abstand vom Rotorblattanschluss erreicht wird, also im rotorblattanschlussnahen Bereich, wobei bei diesen Rotorblättern gemäß dem Stand der Technik Material einspart wird. Wird aber in der Aufsicht eine der Trapezform angenäherte Optimalform verwendet, so ist die größte Breite eines Rotorblattes nicht etwa in einem Abstand zum Rotorblattanschluss, sondern genau im Bereich des Rotorblattanschlusses selbst ausgebildet. Im Innenbereich der Rotorblätter wird dann also nicht möglichst viel Material einspart.

Die Ursache für die bislang vorgenommene Materialeinsparung liegt in der statischen Betrachtungsweise der Strömungsverhältnisse (wie vorbeschrieben) bei der Berechnung/Entwicklung der Rotorblätter. Hinzu kommt, dass gängige Berechnungsprogramme für Rotorblätter das Rotorblatt in einzelne Abstände aufteilen und jeden Blattabschnitt für sich berechnen, um daraus die Bewertung für das gesamte Rotorblatt abzuleiten.

Die Realität sieht allerdings anders aus. Einerseits bläst der Wind nicht gleichmäßig und statisch innerhalb eines bestimmten Flächenbereichs, sondern zeigt deutlich ein stochastisches Verhalten, andererseits ist aufgrund der geringen Umfangsgeschwindigkeit des Rotorblattes im Innenbereich (also im rotornabennahen Bereich) der Einfluss der Windgeschwindigkeit beträchtlich und damit ändert sich der Anstellwinkel in diesem Bereich mit einer hohen Abhängigkeit von der momentan Windgeschwindigkeit. In Folge dessen kommt es entsprechend häufig zum Ablösen der Strömung vom Rotorblatt auch im Innenbereich des Rotorblatts.

In einem solchen Fall ist eine Hysterese wirksam. Die Strömung legt sich bei erneutem Auftreten der vorherigen Windgeschwindigkeit, z. B. nachdem eine Böe vorüber ist, nicht wieder gleich an das Rotorblatt an. Vielmehr muss die Windgeschwindigkeit zunächst weiter absinken (der Anstellwinkel muss sich also weiter verändern), bis die Strömung sich wieder an die Rotorblattoberfläche anlegt. Sinkt die Windgeschwindigkeit aber nicht weiter ab, so kann es durchaus sein, dass für einen längeren Zeitraum trotz anströmenden Windes eine relevante Kraft auf das Rotorblatt ausgeübt wird, weil sich die Strömung noch nicht wieder an die Rotorblattoberfläche angelegt hat.

Durch die erfindungsgemäße Ausführung des Rotorblattes wird die Gefahr der Strömungsablösung deutlich verringert. Diese Ablösegefahr wird ebenfalls durch das relativ dicke Profil verringert. Die beträchtliche Leistungssteigerung lässt sich auch dadurch gut erklären, dass durch die Hysterese-Wirkung bei einmal aufgetretener Ablösung der Strömung die Leistungseinbußen über einem beträchtlichen Zeitraum (für Rotorblätter gemäß dem Stand der Technik) aufrechterhalten bleibt.

Ein weiterer Teil der Leistungssteigerung lässt sich dadurch erklären, dass auch der Wind den Weg des geringsten Widerstandes nutzt. Wenn also das Rotorblatt im nabennahen Innenbereich sehr dünn (große Materialeinsparung) ist, kommt dies einem "Schlupfloch" in der Erntefläche des Rotorkreises gleich, durch welches die Luft bevorzugt strömt. Auch hier ist durchaus eine Schwäche der gängigen Berechnungsprogramme erkennbar, die stets von gleichförmigen Verteilung über die Rotorkreisfläche ausgehen.

"Verschließt" man nun dieses "Schlupfloch" durch die trapezförmige Ausbildung des Rotorblatts im nabennahen Bereich, wird sich eine bessere Verteilung der Luftströmung über die gesamte Kreisfläche einstellen und somit wird auch die Wirkung auf den äußeren Bereich des Rotorblatts noch etwas erhöht. Entsprechend leistet daher das "Verschließen" dieses "Schlupfloches" einen Beitrag zur höheren Leistungsausbeute des erfindungsgemäßen Rotorblattes.

Hier liegt ein weiterer Schwachpunkt der gängigen Berechnungsprogramme, denn diese betrachten auch den unmittelbar an das "Schlupfloch" angrenzenden Rotorblattabschnitt als vollwertigen Rotorblattabschnitt, der wegen der besonderen Strömungsverhältnisse (häufige Strömungsabrisse und ein späteres Wiedereinstellen der vorgesehenen Strömungsverhältnisse) nicht sein kann.

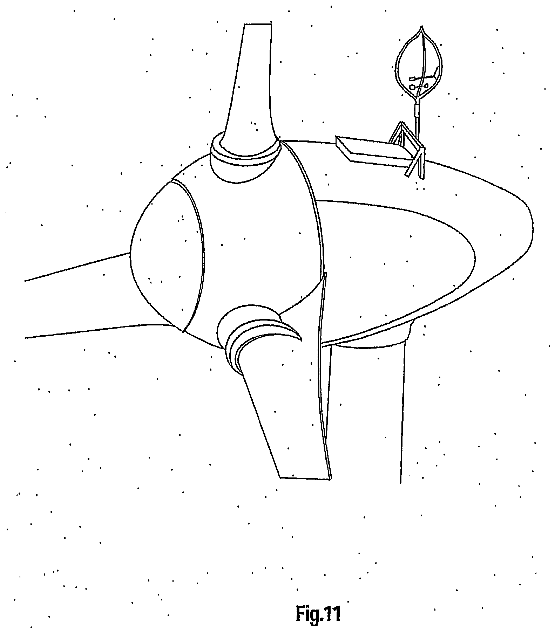

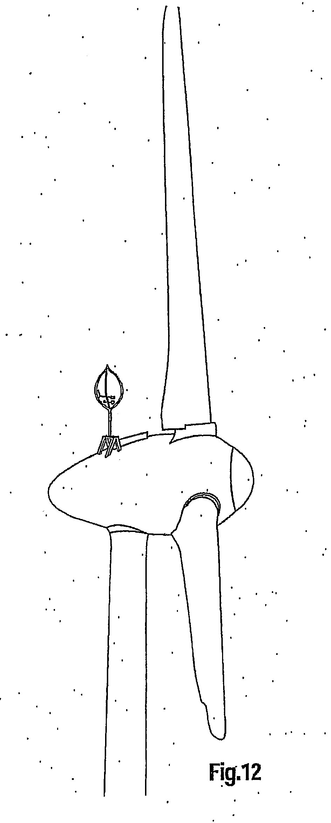

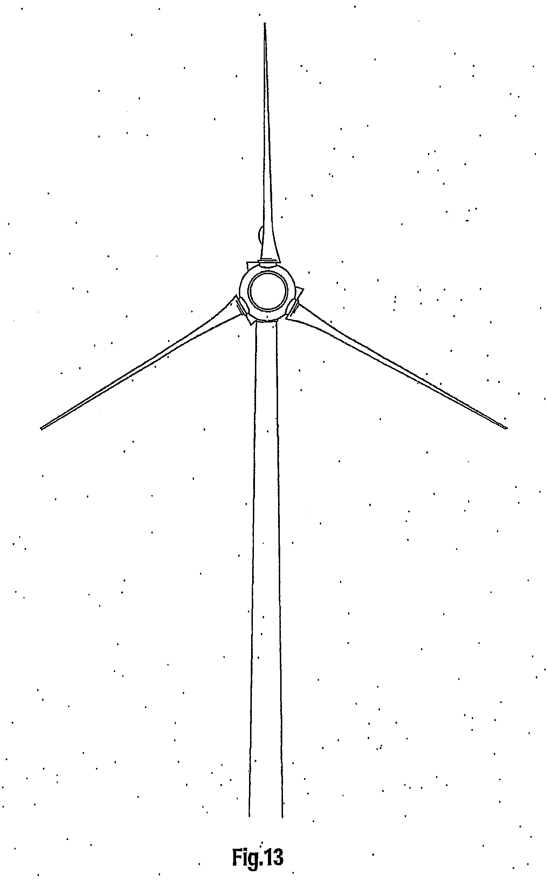

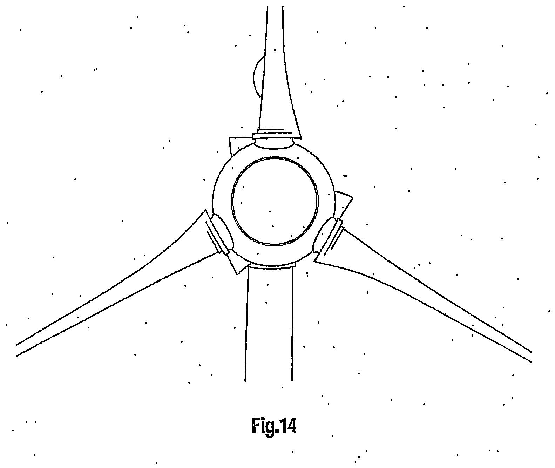

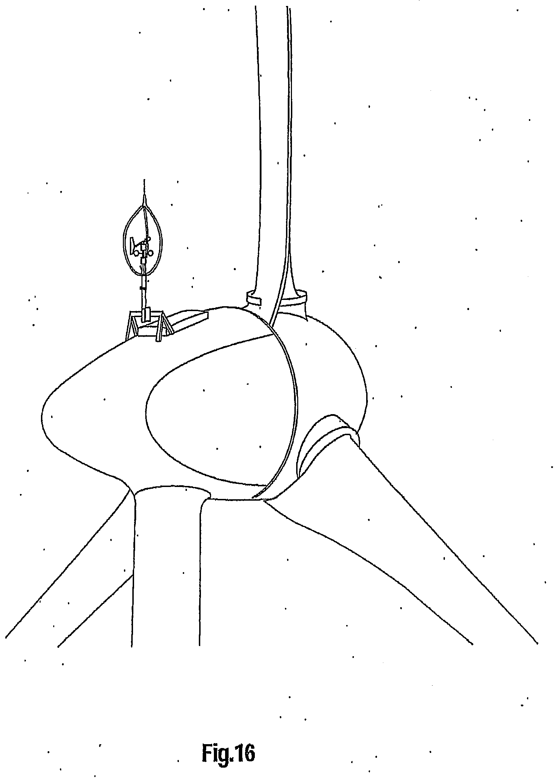

Figuren 11 bis 17 zeigen die Ansicht einer erfindungsgemäßen Windenergieanlage von vorne oder von der Seite. Hierbei ist zu erkennen, wie die drei Rotorblätter im nabennahen Bereich fast nahtlos in die äußere Gestaltung der Gondel übergehen. Dies gilt jedoch nur für die Stellung der Rotorblätter, soweit diese sich in Nenn-Windstellung befinden.

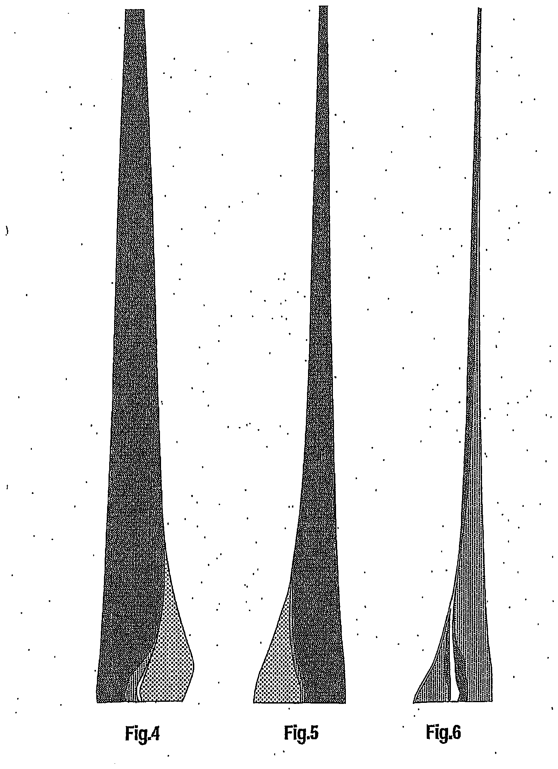

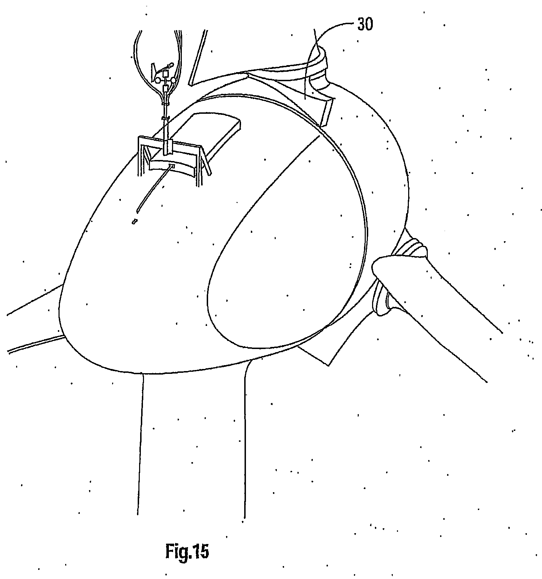

Wenn der Wind dann weiter über Nennwind ansteigt, werden wie üblich die Rotorblätter durch Pitchen (Pitchregelung) langsam aus dem Wind herausgenommen und Figur 15 zeigt, dass dann durchaus ein größerer Abstand zwischen der unteren Kante des Rotorblattes im Innenbereich und der Gondel gegeben ist. Figur 4 zeigt aber auch, dass auf der Außenseite der Gondel eine Struktur ausgebildet ist, die in ihrem Querschnitt dem Profil des Rotorblatts im nabenahen Bereich weitestgehend entspricht und bei Stellung des Rotorblatts in einem Anstellwinkel bei Nenngeschwindigkeit direkt unterhalb des Rotorblatts liegt, so dass nur ein kleiner Spalt zwischen der Struktur und dem Rotorblatt im nabennahen Bereich ausgebildet ist.

Mithin enthält auch die äußere Kontur der Gondel einen Teil des Rotorblatts, welches nicht integraler Bestandteil des Rotorblatts ist.

Bei dem in Figur 18 dargestellten Rotorblattprofil beträgt der Nasenradius etwa 0,146 der Profiltiefe.

Wie in Figur 18 zu erkennen, ist an der Saugseite ein längerer, nahezu geradliniger Bereich ausgebildet. Dieser lässt sich beispielsweise wie folgt beschreiben: Im Bereich 38 % bis 100 % der Profiltiefe beträgt der Radius 1,19 mal der Länge der Profiltiefe. Im Bereich von 40 % bis 85 % der Profiltiefe (siehe Figur 18) beträgt der Radius etwa 2,44 multipliziert mit der Profiltiefe. Im Bereich von 42 % bis 45 % der Profiltiefe beträgt der Radius etwa 5,56 der Profiltiefe.

Im Bereich von 36 % bis 100 % der Profiltiefe beträgt die maximale Abweichung von der idealen Geraden etwa 0,012 der Profillänge. Dieser Wert ist der maßgebende Wert, da der Krümmungsradius variiert und der größte Krümmungsradius bereits in den jeweiligen Bereichen angegeben wird.

Bei dem dargestellten Beispiel beträgt die Länge der Saugseite etwa 1,124 der Länge der Profiltiefe, die Länge der Druckseite beträgt 1,112 der Länge der Profiltiefe. Dies bedeutet, dass die Saugseite nur unwesentlich länger ist als die Druckseite. Es ist daher sehr vorteilhaft, wenn das Verhältnis der Saugseitenlänge zur Druckseitenlänge kleiner ist als 1,2, bevorzugt kleiner als 1,1 bzw. in einem Wertebereich zwischen 1 und 1,03 liegt.

Aus den dargestellten Figuren ist zu erkennen, dass das Rotorblatt seine größte Profiltiefe direkt am Spinner, also an der Außenseite der Gondel der Windenergieanlage aufweist. So kann beispielsweise bei einer Windenergieanlage mit einem Rotordurchmesser von 30 m die Profiltiefe am Spinner etwa 1,8 bis 1,9, bevorzugt 1,84 m betragen. Wenn der Spinner dann etwa einen Durchmesser von 3,2 m aufweist, so beträgt das Verhältnis der Profiltiefe des Rotorblatts am Spinner zum Spinnerdurchmesser etwa 0,575. Es ist daher sehr vorteilhaft, wenn das Verhältnis der Profiltiefe zum Spinnerdurchmesser größer ist als ein Wert von 0,4 bzw. in einem Wertebereich zwischen 0,5 und 1 liegt. Dabei kann jeder Wert aus dem vorgenanntem Wertebereich angenommen werden. In dem vorgenannten Beispiel beträgt das Verhältnis der Profiltiefe zum Rotordurchmesser etwa 0,061. Es liegt auf der Hand, dass daher das "Schlupfloch" möglichst gering ausfällt, wenn das Verhältnis der Profiltiefe zum Rotordurchmesser größer ist als ein Wert von 0,05 bis 0,01, wobei der beispielhafte Wert sich als äußerst günstig herausgestellt hat, was die Leistungsfähigkeit des Rotorblatts angeht.

Ein anderes Beispiel sei ein Rotorblatt mit dem Figur 18 dargestellten Profilquerschnitt im ersten Drittel, wobei die Profiltiefe am Spinner etwa 4,35 m beträgt, der Spinnerdurchmesser 5,4 m beträgt und der Rotordurchmesser insgesamt 71 m beträgt. Dann liegt der Wert der Profiltiefe zum Spinnerdurchmesser bei 0,806 und das Verhältnis der Profiltiefe zum Rotordurchmesser wiederum bei 0,061. Die vorgenanten Werte beziehen sich auf einen Dreiblattrotor mit Pitchregelung.

Wie beschrieben, kann beim erfindungsgemäßen Rotorblatt die breiteste Stelle (die Stelle mit der größten Profiltiefe) des Rotorblatts direkt im Bereich des Blattanschlusses ausgebildet sein. Der Blattanschluss ist der Bereich, in dem das Rotorblatt an die Nabe der Windenergieanlage angeschlossen (verbunden, verschraubt usw.) wird. Darüber hinaus ist die untere Kante des Rotorblatts, also die Kante, die der Gondel der Windenergieanlage zugewandt ist, der äußeren Kontur der Gondel in Längsrichtung weitestgehend nachgeführt bzw. angepasst. Somit liegt hier ein Rotorblatt, wenn es sich in Fahnenstellung befindet (praktisch keine dem Wind ausgerichtete Fläche mehr), parallel zur unteren, der Gondel zugewandten Kante und der Abstand zwischen der unteren Kante und der äußeren Kontur der Gondel ist minimal, vorzugsweise weniger als 50 cm oder noch besser weniger als 20 cm.

Wird nun dieses Rotorblatt in den Wind gestellt, so hat es eine maximal große Fläche auch im sehr nahen Bereich des Rotorblatts (das Schlupfloch ist sehr gering). Die vorgenannte Entgegenhaltung Erich Hau zeigt, dass das Rotorblatt beim Stand der Technik im nabennahen Bereich regelmäßig abnimmt (die Rotorblätter sind dort weniger breit als an ihrer breitesten Stelle) und umgekehrt ist bei dem erfindungsgemäßen Rotorblatt die breiteste Stelle gerade im nabennahen Bereich, so dass auch das Windpotential dort größtmöglich abgeschöpft werden kann.

Bekanntlich ergeben gerade bei sehr großen Rotorblättern im nabennahen Bereich eine sehr große Rotorblattbreite. Damit auch ein Transport solcher Rotorblätter noch möglich ist (die Breite des Rotorblatts im nabennahen Bereich kann bei großen Rotorblättern, also Rotorblätter die länger sind als 30 m, durchaus 5 m bis 8 m betragen), kann das Rotorblatt zweiteilig ausgebildet sein, wobei während des Transports beide Teile getrennt sind und nach dem Transport zusammengesetzt werden können. Hierzu werden beide Teile von Installation an der Windenergieanlage miteinander verbunden, beispielsweise über Schraubverbindungen und unlösbare Verbindungen (Kleben). Dies ist insbesondere bei großen Rotorblättern kein Problem, da die Rotorblätter aufgrund ihrer Größe auch von innen her für das Zusammensetzen zugänglich sind, so dass nach außen hin ein einheitliches Rotorblatt erscheint und Trennlinien an den zusammengesetzten Teilen kaum oder gar nicht sichtbar sind.

Mit dem erfindungsgemäßen Rotorblattdesign kann - wie erste Messungen zeigen - der Wirkungsgrad gegenüber bisherigen Rotorblättern deutlich gesteigert werden.

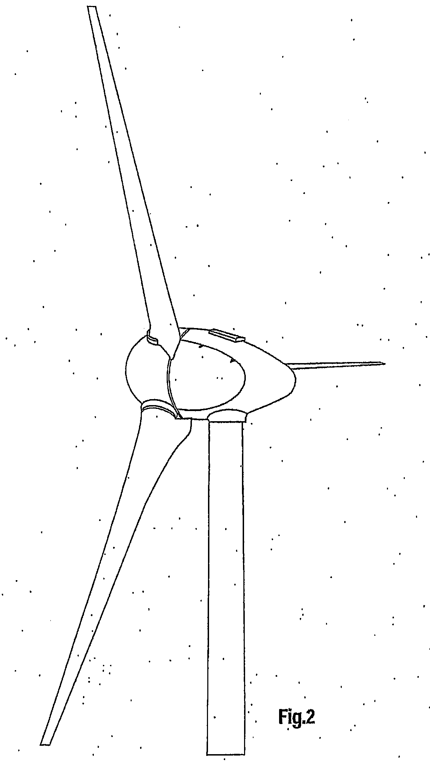

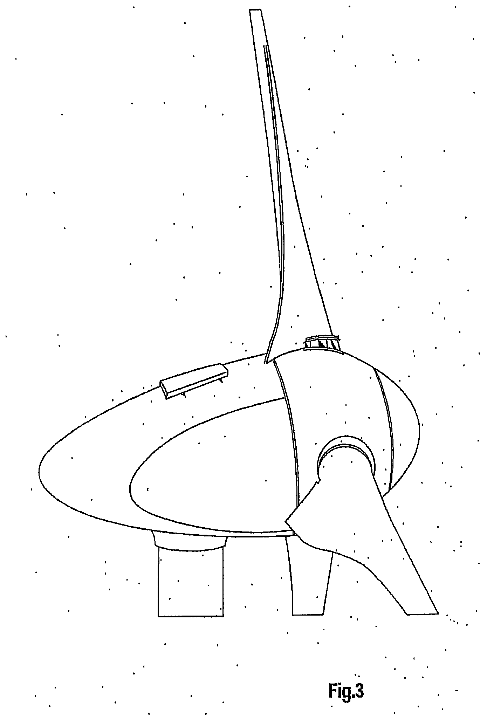

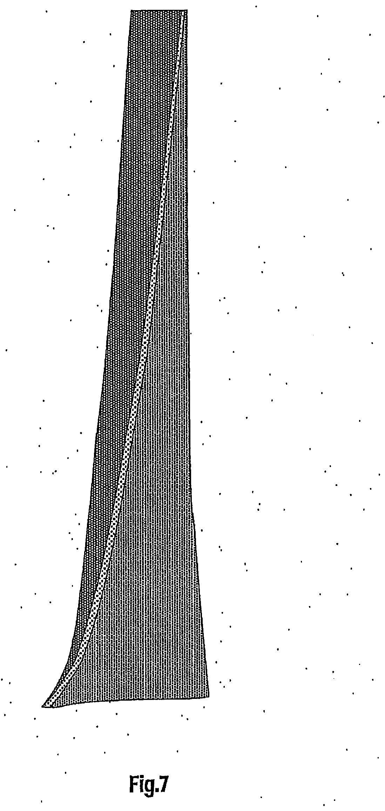

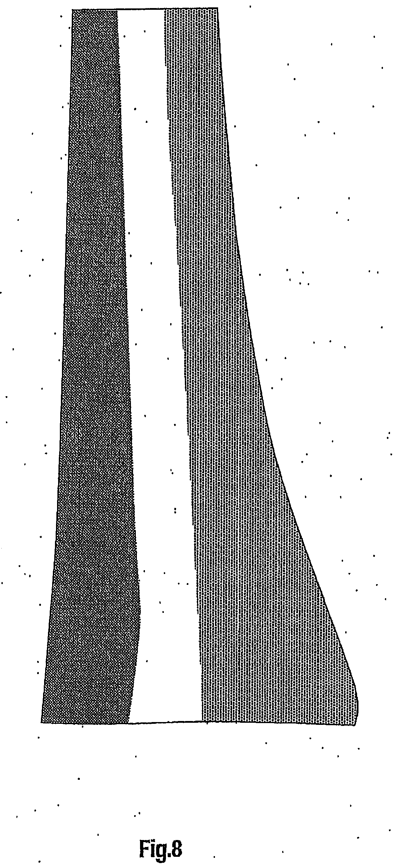

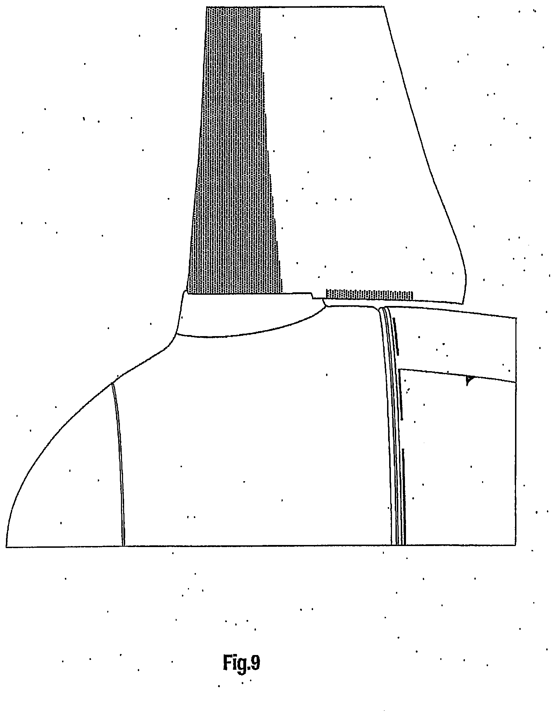

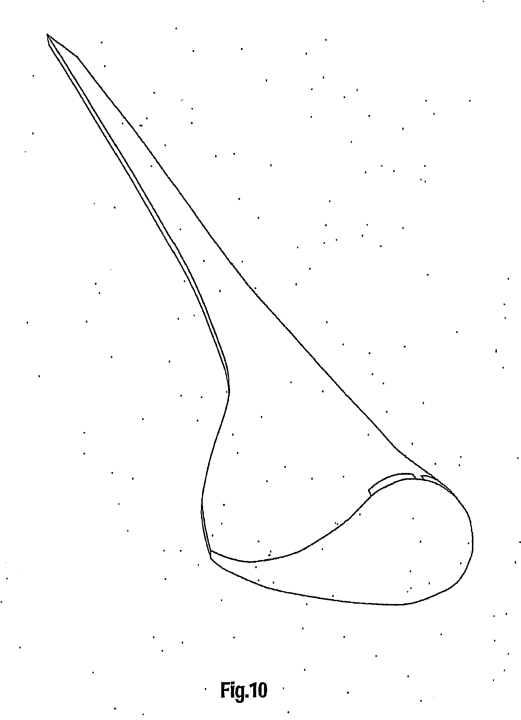

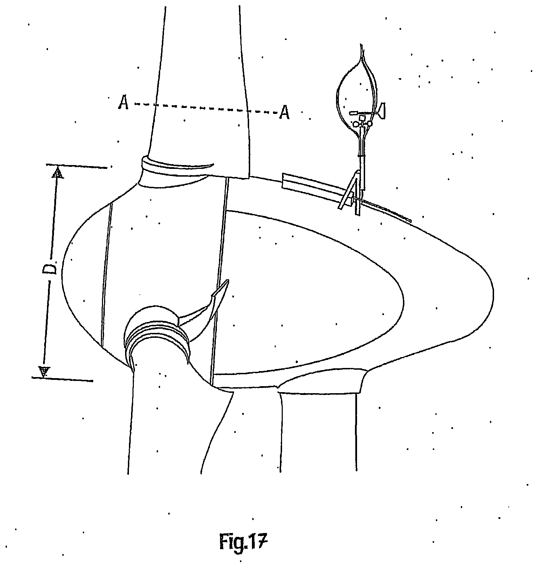

Wie aus den Figuren 1 bis 17 ersichtlich, sind bei einer erfindungsgemäßen Windenergieanlage 1 die Rotorblätter so ausgebildet, dass sie ihre größte Profiltiefe im nabennahen Bereich aufweisen und darüber hinaus sind die Rotorblätter entlang ihres gesamten Profils im nabennahen Bereich sehr nahe an die Gondelverkleidung (Spinner) des Maschinenhauses der Windenergieanlage herangerückt. Damit ergibt sich zumindest für die Stellung, bei welcher das Rotorblatt einen Winkel einnimmt, welcher bei Windgeschwindigkeiten bis zum Nennwindbereich angenommen wird, ein sehr geringer Abstand zur Gondelverkleidung. Während bei der Darstellung wie beispielsweise nach Figur 1, 2 und 3 die Rotorblätter sehr nahe an die Außenverkleidung der Gondel auch mit ihrem hinteren Profilteil herangerückt sind, ist bei einer alternativen Ausführung, wie sie beispielsweise in Figur 11 bis 17 dargestellt ist, die Außenverkleidung der Gondel mit einem Rotorblattteil 30 selbst versehen, welches jedoch selbst nicht integraler Bestandteil des gesamten Rotorblatt ist. So ist insbesondere in den Figuren 15 und 17 gut zu erkennen, dass das auf der Gondelaußenseite ausgebildete Rotorblattteil dort feststeht und in einem Winkel angeordnet ist, welcher der Winkelstellung eines Rotorblattes bis zur Nennwindgeschwindigkeit entspricht, so dass zumindest bei Windgeschwindigkeiten bis zum Nennwind ein minimaler Spalt zwischen der unteren Kante des Rotorblatts auch im hinteren Profiltiefenbereich und der Gondel besteht.

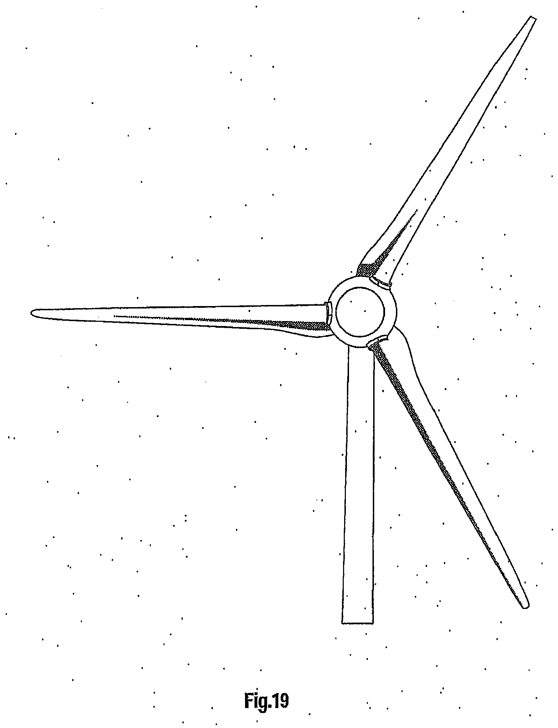

Auch in Figur 19 ist gut zu erkennen, dass durch die erfindungsgemäße Ausführung der Rotorblätter im Rotorzentrum nur ein ganz geringes "Schlupfloch" für den Wind besteht.

Figur 18 zeigt den Querschnitt eines erfindungsgemäßen Rotorblatts gemäß der Linie A - A in Figur 17, also das Profil des Rotorblatts im nabennahen Bereich.

Figur 17 enthält auch eine Angabe, was unter dem Durchmesser D des Spinners zu verstehen ist.

Der Rotordurchmesser wird durch den Durchmesser des Kreisfläche beschrieben, die vom Rotor bei Drehung überstrichen wird.

Wie in Figur 15 und anderen Figuren zu erkennen, ist das Teil 30 des Rotorblatts, welches nicht integraler Bestandteil des drehbaren Rotorblatts ist, integraler Bestandteil der Außenverkleidung der Gondel. Das jeweilige Teil kann an der Gondel angeschraubt sein oder auch mit der Gondel einstückig verbunden oder verklebt sein.

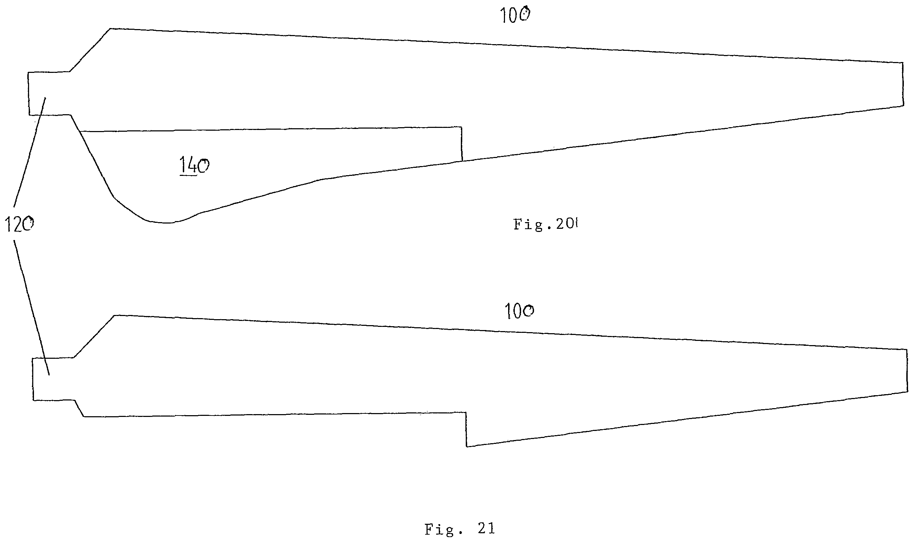

Für den Fall, dass das Rotorblatt gemäß der vorliegenden Anmeldung eine große Länge und eine entsprechende Rotorblatttiefe, also eine lange Blattsehne, im nabennahen Bereich aufweist, ist es unter Umständen aus Transportgründen vorteilhaft, das Blatt in diesem Bereich zweiteilig (oder mehrteilig) auszuführen und einen hinteren Blattbereich erst auf der Baustelle, wo das gesamte Rotorblatt an die Nabe gesetzt wird, wieder zusammenzusetzen. Bei einem solchen Fall kann beispielsweise ein Teil des Rotorblatts so ausgebildet werden wie dies in Fig. 20 dargestellt ist. Dort ist zu erkennen, dass im Blatthinterkantenbereich ein Stück fehlt. Wird das fehlende Stück angesetzt, so ergibt sich in diesem Bereich wiederum das in Fig. 18 dargestellte Profil.

Die Befestigung beider Teile miteinander kann durch Verschrauben, Verkleben oder durch andere Befestigungsarten erfolgen.

Gleichwohl ist es möglich, dass in diesem Bereich des Rotorblatts Mittel zur Veränderung der Größe der Oberfläche des Rotorblatts vorgesehen sind. Diesbezüglich zeigen die Figuren 21-33 entsprechende Ausführungen, wobei hier darauf hingewiesen werden muss, dass der dort dargestellte Rotorblattquerschnitt nur symbolisch zu verstehen ist (das Rotorblatt hat in seinem Profil vornehmlich ein Profil wie nach Figur 18).

Die Ausführungen nach den Figuren 21-33 haben den Vorteil, dass dann im Bedarfsfall die Rotorblattfläche insgesamt verkleinert werden kann, was unter Umständen bei Extremwind, aber auch bei der Transportsituation wünschenswert ist, um einerseits einen Transport zu ermöglichen bzw. zu erleichtern und andererseits bei Extremwind Überlasten von der Windenergieanlage zu nehmen.

In einer besonders bevorzugten Ausführungsform der Erfindung ist ein Teil der Oberfläche aus einem verformbaren Material gebildet, das Teil eines geschlossenen Behälters ist (welcher den hinteren Profilkasten bildet). Dieser geschlossene Behälter kann zum Beispiel mit einem gasförmigen Medium gefüllt werden, wobei dieses gasförmige Medium mit einem vorgebbaren Druck beaufschlagt wird. Dadurch ergibt sich eine teilweise aufblasbare Oberfläche des Rotorblattes, die während des Transports oder bei Auftreten von Extremwind entlüftet werden kann und somit weniger Raum beansprucht bzw. unter dem Winddruck nachgibt. Dadurch wird die wirksame Oberfläche des Rotorblatts und damit die Angriffsfläche für den Wind kleiner. Gleichzeitig sinkt die Belastung der nachfolgenden Komponenten einschließlich des Turmes.

In einer weiteren Ausführungsform der Erfindung weist das Rotorblatt im Hinterkastenbereich (der in Figur 20 nicht gezeigt ist) eine an sich und/oder in sich bewegbare zweite Tragstruktur auf. Damit kann das verformbare Material an vorgegebenen Stellen dieser zweiten Tragstruktur befestigt und weiterhin das verformbare Material mit einer Seite an einem drehbaren Wickelkern befestigt sein.

Im Normalbetrieb der Windenergieanlage kann nun die zweite Tragstruktur ausgefahren sein, d. h., Faltarme können vollständig gestreckt oder teleskopartige Arme voll ausgefahren sein. Das verformbare Material kann mit einer Seite an einem drehbaren Wickelkern befestigt sein. Soll nun die Rotorblattfläche verringert werden, wird - analog zu einer Markise - der Wickelkern so gedreht, dass er das verformbare Material aufwickelt. Gleichzeitig werden die Faltarme gefaltet und verkleinern die zweite Tragstruktur im Bereich der verkleinerbaren Oberfläche, so dass sich die Oberfläche des Rotorblattes entsprechend verringert.

In einer alternativen Ausführungsform der Erfindung besteht ein Teil der Oberfläche des Rotorblattes aus lamellenartigen Streifen, die jeweils auf einer um die eigene Längsachse schwenkbaren Tragschiene angeordnet sind. Dabei sind diese Lamellen im Normalbetrieb so ausgerichtet, dass sie die aerodynamisch wirksame Oberfläche des Rotorblattes vergrößern. Für den Transport und/oder bei Extremlasten können die Tragschienen so geschwenkt werden, dass diese Lamellen z.B. in den Windschatten des verbleibenden Rotorblattes gelangen und dadurch wird die Oberfläche des Rotorblattes verringert.

In einer insbesondere bevorzugten Weiterbildung der Erfindung besteht ein beweglicher Teil der aerodynamisch wirksamen Oberfläche des Rotorblattes aus einem einzelnen Flächenelement, welches in Richtung der Tiefe des Rotorblattes verschiebbar ist. Im Normalbetrieb verlängert dieses Flächenelement die Oberfläche des Rotorblattes, bevorzugt an der Saugseite, um eine große, aerodynamisch wirksame Oberfläche zu schaffen.

Zur Verringerung der Oberfläche kann dieses Flächenelement, vergleichbar mit dem Klappensystem einer Flugzeugtragfläche so verfahren werden, dass es entweder in das Rotorblatt hinein verschoben wird und somit von der verbleibenden Oberfläche des Rotorblattes abgedeckt ist, oder auf die Oberfläche des Rotorblattes verschoben wird und seinerseits die Oberfläche des Rotorblattes abdeckt. In jedem Fall ergibt sich hieraus eine Verringerung der Oberfläche des Rotorblattes.

In einer alternativen Ausführungsform der Erfindung kann dieses Flächenelement mit einer Seite schwenkbar an der ersten Tragstruktur bzw. der Hinterkante des Rotorblattes angelenkt sein. Zur Veränderung der Größe der Rotorblatt-Oberfläche kann dieses Element um diese Schwenkachse herum entweder zur Saugseite oder zur Druckseite des Rotorblattes hin geschwenkt werden.

Eine Schwenkung dieses Flächenelementes um etwa 90° bewirkt dabei, dass dieses Element im Wesentlichen senkrecht zu der Richtung der Luftströmung am Rotorblatt steht und eine entsprechende Bremswirkung entfaltet, da es für die auf der Oberfläche des Rotorblattes entlang strömende Luft ein Hindernis bildet.

Im Folgenden werden mehrere erfindungsgemäße Ausführungsformen anhand der beigefügten Zeichnungen näher erläutert. Dabei zeigen:
- Fig. 20: eine Draufsicht auf ein erfindungsgemäßes Rotorblatt;
- Fig. 21: eine Draufsicht auf den vorderen Teil eines erfindungsgemäßen Rotorblattes;

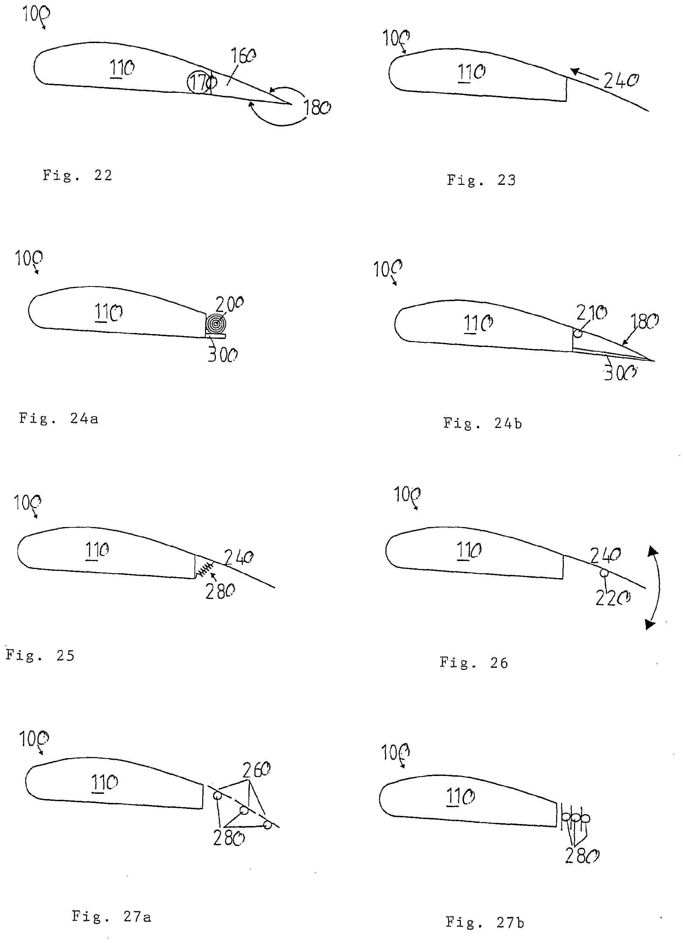

- Fig. 22: eine vereinfachte Querschnitts-Darstellung einer ersten Ausführungsform eines erfindungsgemäßen Rotorblattes;
- Fig. 23: eine vereinfachte Querschnitts-Darstellung einer zweiten Ausführungsform eines erfindungsgemäßen Rotorblattes;
- Fig. 24a,24b: eine vereinfachte Querschnitts-Darstellung einer dritten Ausführungsform eines erfindungsgemäßen Rotorblattes;
- Fig. 25: eine vereinfachte Querschnitts-Darstellung einer vierten Ausführungsform eines erfindungsgemäßen Rotorblattes;
- Fig. 26: eine vereinfachte Querschnitts-Darstellung einer fünften Ausführungsform eines erfindungsgemäßen Rotorblattes;
- Fig. 27a,27b: vereinfachte Querschnitts-Darstellungen einer sechsten Ausführungsform eines erfindungsgemäßen Rotorblattes;

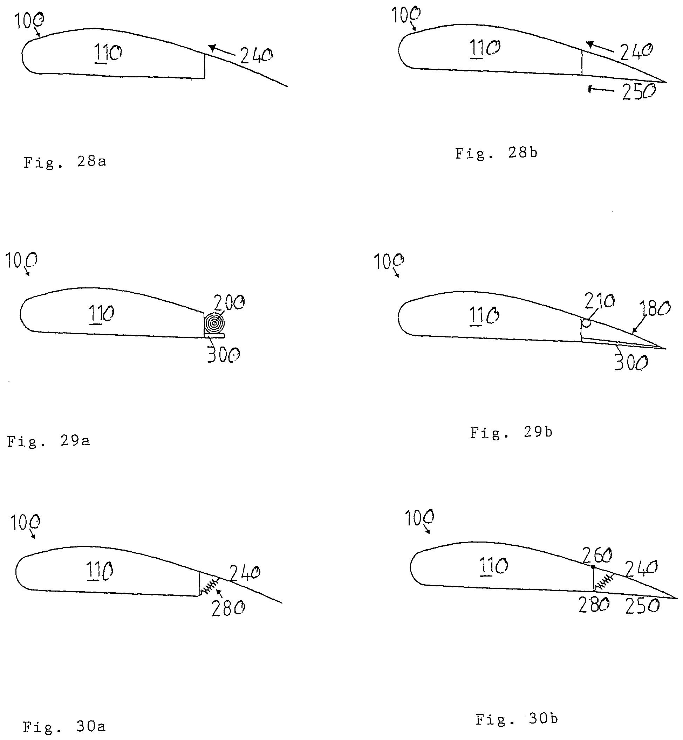

- Fig. 28: eine Draufsicht auf eine Konstruktionsvariante eines erfindungsgemäßen Rotorblattes; und
- Fig. 29-33: weitere vorteilhafte Ausführungsbeispiele der Erfindung.

In Figur 20 ist eine Draufsicht eines vollständigen, erfindungsgemäßen Rotorblattes vereinfacht dargestellt. Das Rotorblatt 100 ist in zwei Bereiche aufgeteilt. Dabei ist das Rotorblatt 100 in wesentlichen Teilen konventionell aufgebaut. In einem der Rotorblattwurzel 120 benachbarten Bereich, nämlich dem Bereich mit der größten Blatttiefe ist jedoch eine Teilung des Rotorblattes erkennbar. Diese Teilung markiert den Bereich des Rotorblattes 140, dessen Oberfläche bei Bedarf verringert und somit der Einwirkung des Windes entzogen werden kann.

Der feste Teil des Rotorblattes 100, dessen Oberfläche unverändert bleibt, ist in Figur 21 gezeigt. Wie in dieser Figur deutlich erkennbar ist, ist die aerodynamisch wirksame Oberfläche des Rotorblattes 100 deutlich verringert, und dadurch ist auch die Belastung, insbesondere in Extremwind-Situationen, deutlich geringer als bei einem in konventioneller Weise aufgebauten Rotorblatt.

Figur 22 zeigt eine vereinfachte Querschnitts-Darstellung einer ersten erfindungsgemäßen Ausführungsform. Dabei ist das Rotorblatt 100 in einen vorderen Bereich 110 und einen Hinterkasten 140 aufgeteilt. Dieser Hinterkasten 140 besteht aus zwei Bahnen verformbaren Materials 180, die zusammen mit der Rückwand des vorderen Bereiches 110 einen geschlossenen Behälter 160 bilden. Wird nun dieser geschlossene Behälter 160 unter Druck mit einem gasförmigen Medium befüllt, bildet das verformbare Material 180 einen Teil (in Figur 20 mit dem Bezugszeichen 140 kenntlich gemacht) der im Normalbetrieb aerodynamisch wirksamen Oberfläche des erfindungsgemäßen Rotorblattes 100.

Durch eine geeignete Wahl des Fülldruckes ergibt sich eine solche Stabilität dieses Teils des Rotorblattes 100, dass er bei normalen Windverhältnissen seine normale Wirkung entfaltet. In einer Extremwind-Situation ist der Winddruck auf diesen Teil des Rotorblattes 100 jedoch größer, so dass dann der äußere Druck größer als der Innendruck ist, und somit kommt es zu einer Verformung des Rotorblattes im Bereich des Hinterkastens 140 und das Rotorblatt gibt dem äußeren Winddruck nach. Dadurch wird die Angriffsfläche für diesen Extremwind geringer und damit die Lasten auf die nachfolgende Konstruktion kleiner. Ergänzend sei ausgeführt, dass dieser Teil des Hinterkastens (in dem das Füllmedium untergebracht ist), z.B. beim Überschreiten einer vorgegebenen Windgeschwindigkeit aktiv entleert werden kann, um die Oberfläche des Rotorblattes zu verkleinern. Diese aktive Entleerung hat den Vorteil, dass die Form des Rotorblattes jederzeit definiert ist, während bei einem Nachgeben des Hinterkastens infolge äußeren Druckes unbestimmte Situationen auftreten könnten.

Um Beschädigungen insbesondere des Behälters 160 zu vermeiden, kann z.B. ein (nicht dargestelltes) Überdruckventil vorgesehen sein, durch welches ein sich im Behälter 160 bildender Überdruck entweichen kann.

Durch die Verwendung eines Kompressors 170 kann der für den Normalbetrieb erforderliche Druck wieder hergestellt werden. Werden weiterhin (ebenfalls nicht dargestellte) steuerbare Ventile und/oder Drucksensoren vorgesehen, kann der Fülldruck in dem Behälter 160 auch bei Schwankungen des Winddruckes nachgeführt werden, um so stets optimale Betriebsbedingungen beizubehalten.

Figur 23 zeigt eine zweite Ausführungsform der vorliegenden Erfindung, bei welcher anstelle eines vollständigen Hinterkastens 140 die Oberfläche der Saugseite des Rotorblattes 100 verlängert ist. Diese Verlängerung ist ein Flächenelement 240, welches sich an die Oberfläche des vorderen Bereiches 110 anschließt.

Zur Verringerung der aerodynamisch wirksamen Fläche kann dieses Flächenelement 240 in der Richtung des Pfeiles verschoben werden. Dieses Verschieben kann z.B. hydraulisch, nämlich mit entsprechenden Hydraulikzylindern, pneumatisch, mit Pneumatikzylindern, durch Elektroantriebe oder auf andere geeignete Weise erfolgen. Dazu müssen natürlich entsprechende (jedoch aus Gründen der Übersichtlichkeit in der Figur nicht dargestellte) Pumpen, Kompressoren oder Antriebe (Aktuatoren) vorgesehen sein.

Dabei kann dieses Verschieben in den vorderen Bereich hinein erfolgen, so dass die Oberfläche des vorderen Bereiches 110 das Flächenelement 240 überdeckt. Alternativ kann die Verschiebung auch auf der Oberfläche des vorderen Bereiches 110 erfolgen, so dass das Flächenelement 240 seinerseits den entsprechenden Teil der Oberfläche des vorderen Bereiches 110 überdeckt. In beiden Fällen ergibt sich eine Verringerung der aerodynamisch wirksamen Oberfläche des Rotorblattes 100.

Eine dritte Ausführungsform der vorliegenden Erfindung ist in den Figuren 24a und 24b gezeigt. Figur 24a zeigt einen Wickel 200 eines verformbaren Materials und das Bezugszeichen 300 bezeichnet Faltarme, die im gefalteten Zustand sind. Die Mechanik kann hier vergleichbar mit derjenigen einer Markise sein.

In Figur 24b ist diese Ausführungsform im Zustand des Normalbetriebs gezeigt. Die Faltarme 300 sind gestreckt, und da das verformbare Material 180 daran befestigt ist, wurde dieses beim Ausfahren der Faltarme 300 von dem Wickel 200 abgewickelt, so dass der Wickelkern 210 jetzt nicht mehr den gesamten Materialwickel trägt.

In dieser abgewickelten Situation ist das verformbare Material 180 einerseits an dem Wickelkern 210 und andererseits an den in der Figur nach rechts weisenden Enden der Faltarme 300 befestigt. Diese Enden der Faltarme 300 können wiederum durch einen nicht dargestellten Steg verbunden sein, um einerseits eine höhere Festigkeit der Konstruktion zu erreichen und andererseits das verformbare Material zu fixieren.

Um ein Nachgeben des verformbaren Materials 180 zwischen dem Wickelkern 210 und den äußeren Enden der Faltarme 300 zu verhindern, kann unterhalb des verformbaren Materials 180 eine (nicht dargestellte) scherengitterartige Vorrichtung vorgesehen sein, die synchron mit den Faltarmen 30 betätigt wird und das verformbare Material 180 im ausgefahrenen Zustand stützt.

Ein Verringern der wirksamen Oberfläche verläuft in umgekehrter Weise; die Faltarme 300 und das (nicht dargestellte) Scherengitter werden eingefahren (gefaltet) und gleichzeitig wird das verformbare Material 180 auf dem Wickelkern 210 aufgewickelt, so dass sich schließlich wieder der in Figur 24a dargestellte Wickel 200 ergibt und die wirksame Oberfläche des Rotorblattes 100 verringert ist.

In einer in Figur 25 gezeigten vierten Ausführungsform der Erfindung ist das Flächenelement 240 an der Rückseite des vorderen Bereiches 110 schwenkbar angelenkt und verlängert somit die Saugseite dieses vorderen Bereiches 110.

Dabei wird das Flächenelement 240 von einer Druckfeder 280 gestützt, die zwischen dem Flächenelement 240 und der Tragkonstruktion des vorderen Bereiches 110 angeordnet ist.

Im Normalbetrieb stützt diese Druckfeder 280 das Flächenelement 240 so, dass es die gewünschte Position beibehält. Ergibt sich nun jenseits der normalen Betriebsbedingungen ein Winddruck auf der Oberseite des Rotorblattes 100, steigt der Druck auf die Oberfläche des Flächenelementes 240 und überwindet die Kraft der Feder 280, so dass das Flächenelement 240 in der Figur 25 nach unten gedrückt wird, dem Winddruck also nachgibt, und somit die aerodynamisch wirksame Oberfläche entsprechend verringert.

Alternativ zu der Feder 280 können natürlich entsprechende teleskopische Elemente wie hydraulische oder pneumatische Vorrichtungen oder mechanische Vorrichtungen zur aktiven Verstellung des Flächenelements gebildet sein, z.B. können Gewindestangen und Schneckenantrieb o.ä. verwendet werden, um das Flächenelement 240 in einer ersten vorgegebenen Position zu halten oder in eine zweite vorgegebene Position zu verfahren. Für die Betätigung dieser Stellglieder müssen natürlich entsprechende Pumpen, Kompressoren oder Antriebe vorgesehen sein, die in dieser Figur wiederum zur Verbesserung der Übersichtlichkeit nicht dargestellt sind.

Ebenso kann wiederum die Windlast erfasst werden, die auf das Flächenelement 240 einwirkt und abhängig von dieser erfassten Windlast kann das Flächenelement 240 um die Schwenkachse herum geschwenkt werden, um eine für die momentanen Betriebsbedingungen optimale Einstellung vorzunehmen.

Figur 26 zeigt eine fünfte Ausführungsform der Erfindung. In dieser fünften Ausführungsform ist das Flächenelement 240 anstelle einer schwenkbaren Anlenkung an der Rückseite des vorderen Bereiches 110 auf einer um ihre eigene Längsachse drehbaren Schwenkachse 220 angeordnet. In der in Figur 26 gezeigten Position verlängert das Flächenelement 24 wiederum die aerodynamisch wirksame Oberfläche des Rotorblattes 100.

Zur Verringerung dieser Oberfläche wird nun die Schwenkachse 220 mit dem daran befestigten Flächenelement 240 um ihre Längsachse derart gedreht, dass sich das äußere Ende des Flächenelementes 240 in einer der beiden durch den Doppelpfeil gezeigten Richtungen bewegt. Dies führt wiederum zu einer Verringerung der aerodynamisch wirksamen Oberfläche des Rotorblattes 100 und damit einhergehend zu einer Veränderung der Windlast auf das Rotorblatt 100 und alle nachfolgenden Komponenten der Windenergieanlage.

Eine Variante der in Figur 26 gezeigten Ausführungsform ist in den Figuren 27a und 27b dargestellt. Dabei ist das in Figur 26 mit 240 bezeichnete Flächenelement in Figur 27a in drei lamellenartige Elemente 260 aufgeteilt. Diese sind in Figur 27a absichtlich mit einem Abstand dargestellt, um diese Aufteilung zu verdeutlichen. In einer tatsächlichen Ausführungsform sind diese drei Elemente natürlich so angeordnet, dass sie eine möglichst geschlossene Fläche bilden, die wiederum möglichst glatt an den vorderen Bereich 110 des Rotorblattes 100 anschließt.

Jede der Lamellen 260 ist auf einer eigenen Schwenkachse angeordnet. Jede dieser Schwenkachsen 280 ist um ihre eigene Längsachse drehbar und gestattet so durch ein Drehen der Schwenkachse 280 um die Längsachse ein Verschwenken der Lamellen 260.

Figur 27b zeigt die erfindungsgemäße Vorrichtung in der Situation, in welcher diese Lamellen so geschwenkt sind, dass die aerodynamisch wirksame Oberfläche des Rotorblattes 100 verringert ist. Dabei sind die Lamellen 260 in den Strömungsschatten des vorderen Bereiches 110 geschwenkt. Dadurch wirken sie einerseits nicht mehr als Rotorblatt-Oberfläche, sind andererseits aber auch dem Angriff des Windes entzogen und damit keinen erhöhten Belastungen ausgesetzt.

Eine solche Anordnung wird erreicht, indem neben einer Drehung der Schwenkachsen 280 um ihre Längsachsen außerdem der Abstand zwischen der in der Figur linken Schwenkachse 280 und dem vorderen Bereich 110 des Rotorblattes 100 einerseits und zwischen den Schwenkachsen 280 untereinander andererseits verringert wird.

Sofern in den Figuren nur eine Verlängerung der Saugseite der Oberfläche dargestellt ist, kann natürlich alternativ oder ergänzend die Oberfläche der Druckseite entsprechend verändert werden.

Wird eine Windenergieanlage mit den vorbeschriebenen Rotorblättern ausgestattet, so ist es möglich, dass bei Auftreten einer Extremwind-Situation nicht nur die große Windstärke festgestellt wird, was mittels Windgeschwindigkeitsmessgeräten erfolgen kann, sondern dass auch durch eine entsprechende Steuerung die Größe der Oberfläche des Rotorblattes dann deutlich verringert wird. Wie in Figur 20 und 21 zu erkennen, ist beispielsweise die Fläche des Rotorblattes nach Figur 20 um mehr als 10% größer als die Oberfläche des Rotorblattes nach Figur 21. Während die Normalgröße des Rotorblattes im Nennbetrieb der Windenergieanlage eingestellt wird, beispielsweise bei einer Windgeschwindigkeit im Bereich von 2-20 m/s Windgeschwindigkeit, kann die Oberflächengröße bei einer Windgeschwindigkeit von oberhalb von 20 m/s verringert werden, so dass die Oberflächengröße deutlich - wie in Figur 21 dargestellt - abnimmt.

Die Steuerung ist bevorzugt computergestützt und sorgt im Bedarfsfall für die jeweils optimal eingestellte Oberflächengröße des Rotorblattes.

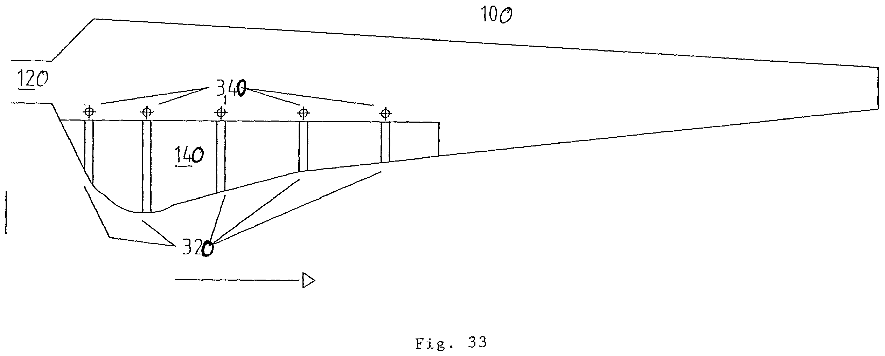

Figur 33 zeigt eine weitere Konstruktionsvariante eines erfindungsgemäßen Rotorblattes. Dabei wird die Struktur durch verschwenkbare Bügel 320 aufgebaut, die mit einer wiederum verformbaren Folie bespannt sein können und in Lagepunkten 340 schwenkbar gelagert sind. Durch eine Bewegung in Richtung der Rotorblattspitze (Pfeil) können diese Schwenkbügel nun beispielsweise um die Lagerpunkte 340 herumgeschwenkt werden und somit das Hinterkasten-Profil verändern.

Die weiteren Figuren 28 bis 33 zeigen weitere alternative bzw. ergänzende Ausführungsformen zu den bisherigen Figuren 22 bis 27b.

Figur 30b (Figur 30a entspricht im Wesentlichen Figur 25) ist in Ergänzung zu Figur 25 ein Element 250 an der Druckseite dargestellt. Da der Angriffspunkt für die Feder 280 nicht gegenüber der Darstellung in Figur 25 bzw. 30a geändert wurde, müssen die Elemente 240 und 250 an der Blatthinterkante zusammenhängen, so dass sie um einen Anlenkpunkt 260 schwenkbar sind. Unter Umständen bietet es sich bei dieser Lösung an, eine Überlappung von dem Rotorblattkasten 11.0 über das Element 250 entlang der Rotorblattlänge auszubilden.

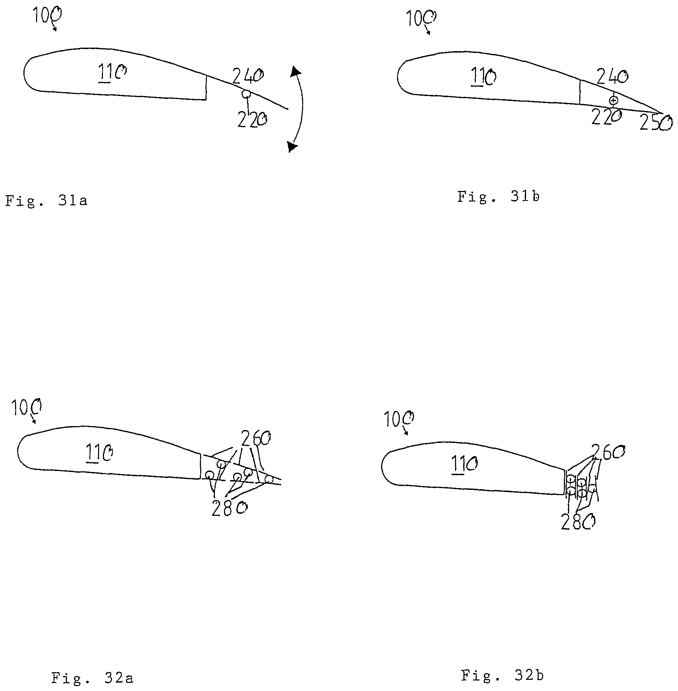

Figur 31b (Erweiterung von dem, was in Figur 26 bzw. Figur 31a dargestellt ist) ist ebenfalls ein druckseitiges Element 250 dargestellt, dass in dem dargestellten Fall über eine mechanische Verbindung ebenso wie das saugseitige Element 240 an einer gemeinsamen Welle 120 befestigt ist.

Die Figuren 32a und 32b zeigen eine Weiterentwicklung dessen, was bereits in den Figuren 27a und 27b dargestellt ist. Dabei sind für entsprechende Elemente an der Druckseite teils eigene Wellen 280 dargestellt. Figur 32a zeigt analog zu Figur 27a ein Rotorblatt im Normalbetrieb, Figur 32b zeigt eine Situation, in der der Hinterkasten durch eine entsprechende Rotation bzw. durch Verfahren der Wellen 280 nicht mehr wirksam ist.

## Patentansprüche

1. Windenergieanlage mit wenigstens feinem Rotorblatt (100), das an einer Rotornabe angebracht ist, sowie mit einer Nabenverkleidung, **dadurch gekennzeichnet, dass** auf der Außenseite der Nabenverkleidung ein Rotorblattteil (30) ausgebildet ist, der mit der Nabenverkleidung fest verbunden ist, nicht aber integraler Bestandteil des Rotorblatts der Windenergieanlage ist und dass das Rotorblatt im Wurzelbereich also nabennahen Bereich seine größte Profiltiefe aufweist und zweiteilig ausgebildet ist, wobei eine in Längsrichtung des Rotorblatts gerichtete Trennlinie ausgebildet ist, und dass das Profil des Rotorblattteils (30), welches an der Nabenverkleidung ausgebildet ist, im Wesentlichen dem Profil des Rotorblattes im nabennahen Bereich entspricht.

2. Windenergieanlage nach Anspruch 1, **dadurch gekennzeichnet, dass** der Querschnitt des Rotorblattes durch eine Skelettlinie beschrieben ist, deren größte Wölbung in einem Bereich von 50° bis 70°, bevorzugt etwa im Bereich von 60° bis 65° liegt.

3. Windenergieanlage nach Anspruch 2, **dadurch gekennzeichnet, dass** die größte Wölbung etwa 3 % bis 10 %, bevorzugt etwa 4 % bis 7 %, bemisst.

4. Windenergieanlage nach einem der vorhergehenden Ansprüche, **dadurch gekennzeichnet, dass** dieser Querschnitt bevorzugt im unteren Drittel des Rotorblatts, der sich dem Rotorblattanschluss anschließt, ausgebildet ist.

5. Windenergieanlage nach einem der vorhergehenden Ansprüche, **dadurch gekennzeichnet, dass** das Rotorblatt eine Druckseite und eine Saugseite aufweist, wobei die Druckseite ein Teil mit einer konkaven Krümmung aufweist und dass auf der Saugseite ein nahezu geradliniger Abschnitt ausgebildet ist.

6. Windenergieanlage nach Anspruch 5, **dadurch gekennzeichnet, dass** der Teil des Rotorblatts, welcher auf der Nabenverkleidung ausgebildet ist, feststeht und im Wesentlichen so ausgerichtet ist, dass er bei Stellung des Rotorblatts bei Nennwindgeschwindigkeit unterhalb der Nennwindgeschwindigkeit direkt unterhalb des nabennahen Bereichs des Rotorblatts der Windenergieanlage liegt.

7. Windenergieanlage nach Anspruch 6, wobei die Windenergieanlage einen Rotor aufweist, der wenigstens ein Rotorblatt aufnimmt, welches im Bereich der Rotorblattnabe seine größte Profiltiefe aufweist, wobei das Verhältnis von Profiltiefe zum Rotordurchmesser den Wert annimmt, welcher im Bereich von etwa 0,04 bis 0,1 liegt, bevorzugt etwa einen Wert von 0,055 bis 0,7, z. B. 0,061 aufweist.

8. Windenergieanlage nach Anspruch 7, mit einem Maschinenhaus, welches einen Generator und einen mit dem Generator verbundenen Rotor aufnimmt, wobei der Rotor wenigstens zwei Rotorblätter enthält, wobei der Rotor eine Nabe aufweist, die mit einer Verkleidung (Spinner) versehen ist, wobei das Verhältnis der Profiltiefe eines Rotorblatts zum Durchmesser des Spinners einen Wert aufweist, welcher größer ist als 0,4, bevorzugt in einem Wertbereich zwischen 0,5 und 1 liegt.

9. Windenergieanlage nach einem der vorhergehenden Ansprüche, mit einem Rotor, welcher bevorzugt mehr als ein Rotorblatt aufweist, wobei das Rotorblatt eine der aerodynamischen Optimalform mehr oder weniger angenäherte Trapezform aufweist und das Rotorblatt im Bereich der Rotorblattwurzel seine größte Breite aufweist und die der Gondel der Windenergieanlage zugewandte Kante der Rotorblattwurzel so ausgebildet ist, dass der Verlauf der Kante im Wesentlichen der äußeren Kontur der Gondel (in Längsrichtung) angepasst ist.

10. Windenergieanlage nach Anspruch 9, **dadurch gekennzeichnet, dass** die untere, der Gondel zugewandte Kante des Rotorblatts im Wurzelbereich bei Verdrehung des Rotorblatts in Fahnenstellung nahezu parallel zur äußeren Kontur der Gondel liegt.

11. Windenergieanlage nach Anspruch 10, **dadurch gekennzeichnet, dass** der Abstand der der unteren Gondel zugewandten Kante des Rotorblatts und der äußeren Kontur der Gondel in Fahnenstellung weniger als 50 cm, vorzugsweise weniger als 20 cm beträgt.

12. Windenergieanlage nach einem der vorhergehenden Ansprüche, **dadurch gekennzeichnet, dass** das Rotorblatt im Wurzelbereich aus der Hauptblattebene gekippt ist.

13. Windenergieanlage nach einem der vorhergehenden Ansprüche, **dadurch gekennzeichnet, dass** das Rotorblatt im Wurzelbereich zweiteilig ausgebildet ist, wobei eine in Längsrichtung des Rotorblatts gerichtete Trennlinie ausgebildet ist.

14. Windenergieanlage nach Anspruch 13, **dadurch gekennzeichnet, dass** beide Teile des Rotorblatts erst kurz vor Installation des Rotorblatts in der Windenergieanlage zusammengesetzt werden.

15. Windenergieanlage nach den Ansprüchen 13 und 14, **dadurch gekennzeichnet, dass** die Teile des Rotorblatts während des Transports des Rotorblatts getrennt sind.

16. Windenergieanlage nach einem der vorhergehenden Ansprüche, **dadurch gekennzeichnet, dass** die Windenergieanlage wenigstens ein Rotorblatt aufweist, welches durch eine Saugseite und eine Druckseite gekennzeichnet ist, wobei das Verhältnis der Länge der Saugseite zur Länge der Druckseite kleiner ist als ein Wert von 1,2, bevorzugt kleiner ist als 1,1 und insbesondere in einem Wertebereich zwischen 1 und 1,03 liegt

## Claims

1. Wind power system with the least one rotor blade (100) that is mounted on a rotor hub, as well as with a hub fairing, **characterized by** the fact that a rotor blade section (30) is realized on the outer side of the hub fairing and rigidly connected to it, wherein this section of the rotor blade does not form an integral part of the rotor blade of the wind power system and that the rotor blade has its maximum profile depth in the root region, namely in the region near the hub, and is realized in two parts, wherein a partition line is oriented in the longitudinal direction of the rotor blade and that the profile of the rotor blade section (30) realized on the hub fairing essentially corresponds to the profile of the rotor blade in the region near the hub.

2. Wind power system according to Claim 1, **characterized by** the fact that the cross section of the rotor blade is described by a skeleton line, the maximum camber of which lies between 50° and 70°, preferably between 60° and 65°.

3. Wind power system according to Claim 2, **characterized by** the fact that the maximum camber is approximately 3%-10%, preferably about 4%-7%.

4. Wind power system according to one of the preceding claims, **characterized by** the fact that this cross section is preferably realized in the lower third of the rotor blade that is located adjacent to the rotor blade mount.

5. Wind power system according to one of the preceding claims, **characterized by** the fact that the rotor blade has a pressure side and a suction side, wherein the pressure side contains a section with a concave camber and a nearly straight section is realized on the suction side.

6. Wind power system according to Claim 5, **characterized by** the fact that the section of the rotor blade realized on the hub fairing is fixed in position and is essentially aligned in such a way that it lies directly underneath the region of the rotor blade near the hub if the wind velocity is below the nominal wind velocity and the rotor blade is adjusted to the position for the nominal wind velocity.

7. Wind power system according to Claim 6, wherein the wind power system comprises a rotor with at least one rotor blade, the maximum profile depth of which lies in the region of the rotor blade hub, wherein the ratio between the profile depth and the rotor diameter assumes a value that lies between approximately 0.04 and 0.1, preferably between 0.055 and 0.7, e.g., 0.061.

8. Wind power system according to Claim 7, with a power house that accommodates a generator and a rotor connected to the generator, wherein the rotor comprises at least two rotor blades, wherein the rotor contains a hub that is provided with a fairing (spinner), and wherein the ratio between the profile depth of the rotor blade and the diameter of the spinner is greater than 0.4, preferably between 0.5 and 1.

9. Wind power system according to one of the preceding claims, with a rotor that preferably comprises more than one rotor blade, wherein the rotor blade has a trapezoidal shape that more or less resembles the optimal aerodynamic shape, wherein the rotor blade has its maximum width in the region of the rotor blade root, and wherein the edge of the rotor blade root that faces the nacelle of the wind power system is realized in such a way that it essentially follows the outside contours of the nacelle (in the longitudinal direction) .

10. Wind power system according to Claim 9, **characterized by** the fact that the lower edge of the rotor blade that faces the nacelle lies nearly parallel to the outside contour of the nacelle in the root region when the rotor blade is turned into the feathered pitch position.

11. Wind power system according to Claim 10, **characterized by** the fact that the distance between the lower edge of the rotor blade that faces the nacelle and the outside contours of the nacelle is less than 50 cm, preferably less than 20 cm, in the feathered pitch position.

12. Wind power system according to one of the preceding claims, **characterized by** the fact that the rotor blade is tilted out of the principal plane of the rotor blade in the root region.

13. Wind power system according to one of the preceding claims, **characterized by** the fact that the rotor blade is realized in two parts in the root region, wherein the partition line is oriented in the longitudinal direction of the rotor blade.

14. Wind power system according to Claim 13, **characterized by** the fact that the two parts of the rotor blade are not assembled until the installation of the rotor blade into the wind power system.

15. Wind power system according to Claims 13 and 14, **characterized by** the fact that the parts of the rotor blade remain separated during transport.

16. Wind power system according to one of the preceding claims, **characterized by** the fact that the wind power system contains at least one rotor blade that is **characterized by** a suction side and a pressure side, wherein the ratio between the length of the suction side and the length of the pressure side is smaller than 1.2, preferably smaller than 1.1, particularly between 1 and 1.03.

## Revendications

1. Installation à énergie éolienne avec au moins une pale de rotor (100), qui est montée au niveau d'un moyeu de rotor, ainsi qu'avec un habillage de moyeu, **caractérisée en ce qu'**une partie de pâle de rotor (30) est réalisée sur le côté extérieur de l'habillage de moyeu, qui est reliée solidement à l'habillage de moyeu, mais ne fait pas partie intégrante de la pale de rotor de l'installation à énergie éolienne et que la pale de rotor présente dans la zone de la racine, donc la zone proche du moyeu, sa plus grande profondeur de profil, et est réalisée en deux parties, dans laquelle une ligne de séparation dirigée dans la direction longitudinale de la pale de rotor est réalisée, et que le profil de la partie de pale de rotor (30), qui est réalisé au niveau de l'habillage de moyeu, correspond sensiblement au profil de la pale de rotor dans la zone proche du moyeu.

2. Installation à énergie éolienne selon la revendication 1,
**caractérisée en ce que** la section transversale de la pale de rotor est décrite par une ligne de squelette, dont la plus grande courbure se situe dans une plage de 50° à 70°, de préférence environ dans la plage de 60° à 65°.

3. Installation à énergie éolienne selon la revendication 2,
**caractérisée en ce que** la plus grande courbure mesure environ 3 % à 10 %, de préférence environ 4 % à 7 %.

4. Installation à énergie éolienne selon l'une quelconque des revendications précédentes,
**caractérisée en ce que** cette section transversale est réalisée de préférence dans le tiers inférieur de la pale de rotor, qui se raccorde au raccord de pale de rotor.

5. Installation à énergie éolienne selon l'une quelconque des revendications précédentes,
**caractérisée en ce que** la pale de rotor présente un côté pression et un côté aspiration, dans laquelle le côté pression présente une partie avec une courbure concave et que sur le côté aspiration une section pratiquement rectiligne est réalisée.

6. Installation à énergie éolienne selon la revendication 5,
**caractérisée en ce que** la partie de la pale de rotor, laquelle est réalisée sur l'habillage de moyeu, est fixe et sensiblement orientée de sorte qu'elle se situe, en cas de position de la pale de rotor en cas de vitesse de vent nominale inférieure à la vitesse de vent nominale, directement sous la zone proche du moyeu de la pale de rotor de l'installation à énergie éolienne.

7. Installation à énergie éolienne selon la revendication 6,
dans laquelle l'installation à énergie éolienne présente un rotor, qui reçoit au moins une pale de rotor, laquelle présente, dans la zone du moyeu de pale de rotor, sa plus grande profondeur de profil, dans laquelle le rapport de la profondeur de profil par rapport au diamètre de rotor adopte la valeur qui se situe dans la plage d'environ 0,04 à 0,1, présente de préférence environ une valeur de 0,055 à 0,7, par exemple 0,061.

8. Installation à énergie éolienne selon la revendication 7,
avec une nacelle, laquelle reçoit un générateur et un rotor relié au générateur, dans laquelle le rotor contient au moins deux pales de rotor, dans laquelle le rotor présente un moyeu, qui est doté d'un habillage (casserole), dans laquelle le rapport de la profondeur de profil d'une pale de rotor par rapport au diamètre de la casserole présente une valeur, laquelle est supérieure à 0,4, se situe de préférence dans une plage de valeurs entre 0,5 et 1.

9. Installation à énergie éolienne selon l'une quelconque des revendications précédentes, avec un rotor, lequel présente de préférence plus qu'une pale de rotor, dans laquelle la pale de rotor présente une forme trapézoïdale plus ou moins approchée de la forme optimale aérodynamique et la pale de rotor présente, dans la zone de la racine de pale de rotor, sa plus grande largeur et l'arête de la racine de pale de rotor tournée vers la nacelle de l'installation à énergie éolienne est réalisée de sorte que l'allure de l'arête est adaptée sensiblement au contour extérieur de la nacelle (dans la direction longitudinale).

10. Installation à énergie éolienne selon la revendication 9,
**caractérisée en ce que** l'arête inférieure, tournée vers la nacelle de la pale de rotor dans la zone de la racine lors de la rotation de la pale de rotor en position drapeau, se trouve à peu près parallèle au contour extérieur de la nacelle.

11. Installation à énergie éolienne selon la revendication 10,
**caractérisée en ce que** la distance de l'arête tournée vers la nacelle inférieure de la pale de rotor et le contour extérieur de la nacelle en position de drapeau est inférieure à 50 cm, de préférence inférieure à 20 cm.

12. Installation à énergie éolienne selon l'une quelconque des revendications précédentes, **caractérisée en ce que** la pale de rotor est basculée, dans la zone de la racine, hors du plan de pale principal.

13. Installation à énergie éolienne selon l'une quelconque des revendications précédentes, **caractérisée en ce que** la pale de rotor est réalisée en deux parties dans la zone de la racine, dans laquelle une ligne de séparation dirigée dans la direction longitudinale de la pale de rotor est réalisée.

14. Installation à énergie éolienne selon la revendication 13,
**caractérisée en ce que** les deux parties de la pale de rotor ne sont assemblées que peu de temps avant l'installation de la pale de rotor dans l'installation à énergie éolienne.

15. Installation à énergie éolienne selon les revendications 13 et 14,
**caractérisée en ce que** les parties de la pale de rotor sont séparées pendant le transport de la pale de rotor.

16. Installation à énergie éolienne selon l'une quelconque des revendications précédentes,
**caractérisée en ce que** l'installation à énergie éolienne présente au moins une pale de rotor, laquelle est **caractérisée par** un côté aspiration et un côté pression, dans laquelle le rapport de la longueur du côté aspiration par rapport à la longueur du côté pression est inférieure à une valeur de 1,2, de préférence inférieure à, 1,1 et se situe en particulier dans une plage de valeurs entre 1 et 1,03.
